# EUROPÄISCHE PATENTSCHRIFT

(11) **EP 1 254 811 B1**
(45) Veröffentlichungstag und Bekanntmachung des Hinweises auf die Patenterteilung: **01.06.2005**
(21) Anmeldenummer: 02005239.5
(22) Anmeldetag: 08.03.2002
(51) Int. Cl.: B60R 16/02

(54) **Schnittstellenfunktionen ausführende Kommunikationsvorrichtung für Kraftfahrzeuge**
Vehicle communication system which functions as an universal interface
Dispositif de communication pour véhicules assurant des fonctions d'interface universel

(30) Priorität: 02.05.2001 DE 10121350
(43) Veröffentlichungstag der Anmeldung: 06.11.2002
(73) Patentinhaber: Volkswagen Aktiengesellschaft, 38436 Wolfsburg (DE)
(72) Erfinder: Rieck, Klaus, 38108 Braunschweig (DE); Lilienthal, Jörg, 38518 Gifthorn (DE); Anders, Peter, 38543 Hillerse (DE)
(74) Vertreter: Effert, Bressel und Kollegen

(56) Entgegenhaltungen:
- WO-A-97/28988
- US-A- 5 661 651
- US-A- 6 144 114

## Beschreibung

Die Erfindung betrifft eine Schnittstellenfunktionen ausführende Kommunikationsvorrichtung für Kraftfahrzeuge zum Anschluß einer Mehrzahl von in einem Kraftfahrzeug und/oder außerhalb des Kraftfahrzeuges befindlichen Geräten an im und/oder am Kraftfahrzeug angeordneten Sensoren und/oder Funktionseinrichtungen.

Eine kommunikationsvorrichtung nach dem Oberbegriff von Anspruch 1 ist aus WO 97/28988 bekannt.

Aus der DE 43 92 671 C2 ist ein für verschiedene Netzwerkarten ausgelegtes Kommunikationssystem für Kraftfahrzeuge bekannt, in dem eine Mehrzahl von Mikroprozessor-Steuermodulen mit einer Mehrzahl von Mikroprozessor-Schnittstellenmodulen kommuniziert, wobei jedes der Schnittstellenmodule mit einer oder mehreren Arbeitseinheiten wie Sensoren oder Betätigungselementen gekoppelt ist. Jedes Steuermodul und jedes Schnittstellenmodul ist durch universelle Verbindungseinrichtungen bzw. Verbinder an eine serielle Datenübertragungs-Hauptleitung gekoppelt, wobei die Schnittstellenmodule in großer Nähe zu den Sensoren und Betätigungselementen angeordnet sind, so daß diese durch eine einfache, kurze Verdrahtung mit dem Schnittstellenmodul verbunden sind. Die Datenübertragungs-Hauptleitung ist in dem Kraftfahrzeug so ausgelegt, daß die Schnittstellenmodule sowie die Steuermodule in bequemer Weise nach Erforderlichkeit innerhalb des Fahrzeuges angeordnet werden können. Dabei ist es möglich, auch nach Einbau des Kommunikationssystems in das Kraftfahrzeug Schnittstellenmodule sowie Steuermodule hinzuzufügen oder zu entfernen. Die Schnittstellenmodule weisen für verschiedene Arten von Netzwerken ausgelegte Verbindungseinrichtungen bzw. Verbinder auf, um technische Mikroprozessordaten zu senden und zu empfangen, sowie Koppeleinrichtungen für bidirektionale Kommunikationssignale. Die Koppeleinrichtungen weisen ferner Einrichtungen auf, um Steuerbefehle in Steuersignale umzuwandeln und um Zustandsantwortsignale in Zustandsinformationen umzuwandeln. Die Koppeleinrichtungen können dabei unterschiedliche Signalumformungen durchführen, z.B. eine Analog-Digital-Umwandlung oder eine digitale Signalverarbeitung. Die universellen Verbindungseinrichtungen bzw. Verbinder ermöglichen eine Datenübertragung mit einer oder mit mehreren Geschwindigkeiten sowie mit einem oder mehreren Protokollen.

Dieses bekannte Kommunikationssystem ermöglicht somit zwar auch nach Einbau in das Kraftfahrzeug noch die Nachrüstung weiterer Steuermodule, Schnittstellenmodule und weiterer Sensoren und Betätigungselementen, jedoch ist dabei die Nachrüstung von Sensoren und Betätigungselementen auf solche beschränkt, die über eine Verdrahtung mit dem Schnittstellenmodul verbindbar sind.

Aufgabe der vorliegenden Erfindung ist es, eine Schnittstellenfunktionen ausführende Kommunikationsvorrichtung für Kraftfahrzeuge zu schaffen, die auch in Bezug auf zukünftig entwickelte Hardware sowie zukünftig entwickelte Signalübertragungsverfahren und Übertragungsprotokolle flexibel und anpassungsfähig bleibt.

Diese Aufgabe wird durch eine Kommunikationsvorrichtung mit den im Anspruch 1 angegebenen Merkmalen gelöst.

Die erfindungsgemäße Kommunikationsvorrichtung ermöglicht den Anschluß einer Mehrzahl von in einem Kraftfahrzeug und/oder außerhalb des Kraftfahrzeuges befindlichen Geräten an im und/oder am Kraftfahrzeug angeordneten Sensoren und/oder Funktionseinrichtungen. Sie weist erfindungsgemäß mindestens eine Verbindungseinrichtung zum Anschluß eines austauschbaren Moduls auf, durch das in ihr eine Mehrzahl unterschiedlicher Anschlüsse in Bezug auf Hardware und/oder in Bezug auf Übertragungswege und Protokolle integriert werden können.

Bei den im bzw. außerhalb des Kraftfahrzeuges verwendeten Geräten kann es sich beispielsweise um ein Mobiltelefon, Mikrophone einer Freisprechanlage, Kopfhörer, Computer, Organizer, Drucker, Navigationssysteme, etc. handeln. Bei den Sensoren kann es sich dagegen beispielsweise um Geschwindigkeitssensoren, Drehzahlmesser, Lenkwinkelsensoren, Gyroskope (Drehwinkelsensoren), Abstandssensoren, etc. handeln. Als Funktionseinrichtungen kommen z.B. Fahrzeugbatterien, Scheinwerfer, Audioanlagen, Klimaanlagen, Standheizungen, Schließanlagen, Alarmanlagen, Bremssysteme etc. aber auch teilweise die zuvor genannten Geräte in Frage.

Die Ausgestaltung der erfindungsgemäßen Kommunikationsvorrichtung umfaßt mindestens ein Modul zur drahtlosen Kommunikation nach dem Bluetooth Standard zwischen den Geräten, Sensoren und/oder Funktionseinrichtungen. Diese Ausgestaltung bietet die Möglichkeit, die Geräte, Sensoren und Funktionseinrichtungen flexibel miteinander zu verbinden, so daß die Geräte an beliebigen Stellen im und außerhalb des Fahrzeuges bedienbar bzw. anordbar sind. Diese Möglichkeit ist bei dem aus der DE 43 92 671 C2 bekannten Kommunikationssystem nicht gegeben, da die zum Anschluß eines Gerätes verwendete kurze Verdrahtung das Vorhandensein der seriellen Datenübertragungs-Hauptleitung in unmittelbarer Nähe des Gerätenutzungs- bzw. Geräteeinbauortes voraussetzt. Die Verwendung einer längeren Verdrahtung ist bei dem bekannten Verfahren nicht nur aus Kostengründen ungünstig. Dies ist bei einem gegebenenfalls durch den Fahrgastraum verlaufenden Anschlußkabel auch wegen möglicher Behinderungen durch das Kabel in sicherheitstechnischer Hinsicht sowie unter ästhetischen Gesichtspunkten ungünstig.

Die Bluetooth-Übertragung erfordert im Gegensatz zu Verbindungen per Infrarot, die auf optischer Übertragung basieren, keine direkte Sichtverbindung zwischen der Kommunikationsvorrichtung und den daran drahtlos anzuschließenden Geräten, Sensoren bzw. Funktionseinrichtungen. Gegenüber einer Verbindung per Infrarot zeichnet sich die Bluetooth-Übertragung ferner aus durch einen wesentlichen geringeren Stromverbrauch, eine größere Reichweite von ca. 10 m, die Einsatzmöglichkeit auch bei starker Sonneneinstrahlung, die Möglichkeit einer gleichzeitigen, unabhängigen Verbindung von mehreren Geräten auf engstem Raum, eine automatische Fehlerkorrektur auf der Funkstrecke, die Möglichkeit einer verschlüsselten Datenübertragung sowie die Möglichkeit einer gleichzeitigen Übertragung von Sprache und Daten.

Eine weitere vorteilhafte Ausgestaltung der erfindungsgemäßen Kommunikationsvorrichtung besteht darin, daß das austauschbare Modul ein Modul zur drahtlosen Kommunikation nach dem GPRS-Übertragungsstandard ist.

GPRS steht für "GSM Packet Radio Service" und bedeutet eine "paketweise" Informationsübertragung, bei der digitalisierte Sprache oder Daten in einzelne Pakete zerlegt und auf einem freien, beliebigen Zeitschlitz übertragen werden. Der Hauptnutzen dieser Übertragungsart besteht darin, daß auch kleine Übertragungskapazitäten innerhalb eines Zeitschlitzes genutzt werden können. Der GPRS-Übertragungsstandard hat gegenüber der normalen GSM-Übertragung (Groupe Spéciale Mobile) unter anderem folgende Vorteile: Die Pakete können in beliebiger Reihenfolge über beliebige Wege übertragen werden; verstümmelte oder verlorene Pakete werden automatisch nochmals angefordert; innerhalb der Übertragungskette findet eine automatische Fehlerkorrektur statt; der Verbindungsaufbau und damit die hierfür benötigte Zeit entfallen, da die Sender-Empfängereinrichtung quasi immer verbunden bleibt; und die Verrechnung erfolgt nicht nach Verbindungszeiten, sondern nach übertragener Datenmenge.

Eine weitere vorteilhafte Ausgestaltung der erfindungsgemäßen Kommunikationsvorrichtung besteht darin, daß die Vorrichtung eine eigene Rechnereinrichtung aufweist, die ausgewählte Fahrzeugdaten, z.B. Tachosignaldaten, Lenkwinkeldaten, Drehbeschleunigungsdaten, etc., empfängt und die empfangenen Daten verknüpft und aufbereitet.

Nach einer weiteren bevorzugten Ausgestaltung ist die erfindungsgemäße Kommunikationsvorrichtung als mobile Einheit ausgebildet, so daß sie an verschiedenen Stellen eines Kraftfahrzeuges, vorzugsweise in die Mittenkonsole, etwa dort, wo sich üblicherweise der Aschenbecher befindet, einbaubar ist.

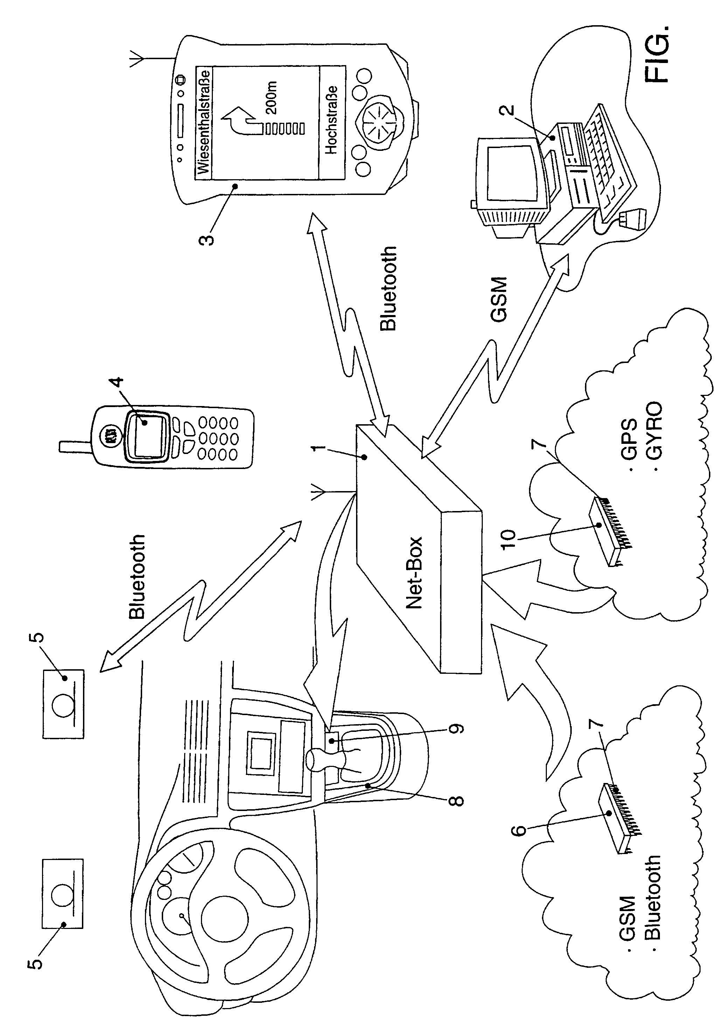

Nachfolgend wird die Erfindung anhand einer ein Ausführungsbeispiel darstellenden Zeichnung näher erläutert. Die einzige Figur der Zeichnung zeigt in schematischer Darstellung eine in einem eigenen Gehäuse untergebrachte erfindungsgemäße Kommunikationsvorrichtung 1 sowie verschiedene daran drahtlos anschließbare Geräte, und zwar als Beispiel ein Computer 2, ein Navigationsgerät 3, ein Mobiltelefon 4 und zwei Mikrophone 5. Die als "Net-Box" bezeichnete erfindungsgemäße Kommunikationsvorrichtung 1 ist eine zentrale, mobile, universell einsetzbare Kommunikationsvorrichtung, die in erster Linie Schnittstellenfunktionen übernimmt und in der Lage ist, eine Vielzahl unterschiedlicher Anschlüsse sowohl in Bezug auf die Hardware als auch in Bezug auf die Übertragungswege und Protokolle zu integrieren.

Die erfindungsgemäße Kommunikationsvorrichtung 1 weist eine Mehrzahl von Steckerbuchsen (nicht gezeigt) auf, über die sie insbesondere an eine Busleitung, beispielsweise eine CAN-Busleitung anschließbar ist. Über die Busleitung kann die Kommunikationsvorrichtung ("Net-Box") 1 mit Sensoren und/oder Funktionseinrichtungen des Kraftfahrzeuges kommunizieren. Über die Steckerbuchsen können zudem auch Geräte wie Computer, Organizer, Drucker, Bedienelemente, Tastaturen, LCD-Displays sowie andere Anzeigeeinrichtungen, Navigationsgeräte, Mobiltelefone, etc. direkt an der Kommunikationsvorrichtung 1 angeschlossen werden. Darüber hinaus weist die Kommunikationsvorrichtung 1 mindestens ein austauschbares Modul 6 auf, das eine drahtgebundene und/oder drahtlose Kommunikation mit beliebigen, insbesondere mit den oben angegebenen Geräten 2, 3, 4 und 5 ermöglicht. Das mindestens eine austauschbare Modul 6 ist über Steckkontakte 7 mit einer Platine (nicht gezeigt) der Kommunikationsvorrichtung 1 verbindbar. In der Kommunikationsvorrichtung 1 können somit auch zukünftig entwickelte Anschlüsse und Protokolle integriert werden. Die erfindungsgemäße Kommunikationsvorrichtung 1 stellt somit eine ideale Nachrüstverbindung zum nachträglichen Anschluß beliebiger Geräte an das Kommunikationssytem eines Kraftfahrzeuges dar.

Da die erfindungsgemäße Kommunikationsvorrichtung 1 als mobile Einheit ausgebildet ist, kann sie an verschiedenen Stellen eines Kraftfahrzeuges, vorzugsweise in die Mittenkonsole 8 eines Kraftfahrzeuges, beispielsweise dort, wo sich üblicherweise der Aschenbecher 9 befindet, eingebaut werden.

Dabei sind in der Kommunikationsvorrichtung 1 austauschbare Module 6 eingesetzt, die eine drahtlose Kommunikation nach dem Bluetooth-Übertragungsstandard bzw. dem GSM-Übertragungsstandard, insbesondere dem GPRS-Übertragungsstandard ermöglichen. Darüber hinaus können in der Kommunikationsvorrichtung 1 austauschbare Navigationsmodule 10 enthalten sein, nämlich ein GPS-Modul (Global Positioning System Modul) sowie ein GYRO-Modul (Gyroskop- bzw. Drehwinkelsensor-Modul). Es ist auch möglich, die genannten Bluetooth-, GSM-, GPRS-, GPS- und GYRO-Module in einem oder zwei Modulen zusammenzufassen. Die Kommunikationsvorrichtung 1 besitzt eigene Rechenleistung und erhält ausgewählte Fahrzeugdaten, z.B. ein Fahrgeschwindigkeitssignal, ein Lenkwinkelsignal, ein Drehwinkelbeschleunigungssignal, etc., und ist in der Lage, die empfangenen Informationen zu verknüpfen und aufzubereiten. Insbesondere erfolgt in der Kommunikationsvorrichtung 1 eine Signalkonditionierung, z.B. eine Geräuschunterdrückung.

### BEZUGSZEICHENLISTE

- 1: mobile Kommunikationsvorrichtung ("Net-Box")
- 2: Computer
- 3: Navigationsgerät
- 4: Mobiltelefon
- 5: Mikrophone
- 6: austauschbares Modul
- 7: Steckkontakte
- 8: Mittenkonsole
- 9: Aschenbecher
- 10: austauschbares Navigationsmodul

## Patentansprüche

1. Kommunikationsvorrichtung mit Schnittstellenfunktion in einem Kraftfahrzeug zum Anschluss einer Mehrzahl von in einem Kraftfahrzeug und/oder außerhalb des Kraftfahrzeuges befindlichen Geräten an im und/oder am Kraftfahrzeug angeordneten Sensoren und/oder Funktionseinrichtungen,
wobei die Kommunikationsvorrichtung (1) mindestens ein austauschbares Modul (6, 10) umfasst, das mittels einer Verbindungseinrichtung mit der Kommunikationsvorrichtung (1) verbunden ist, wobei in dem austauschbaren Modul (6) Daten in Bezug auf Übertragungswege und Protokolle abgelegt sind, die auf die anzuschließenden Geräte (2, 3, 4, 5) abgestimmt sind, **dadurch gekennzeichnet, dass** das austauschbare Modul über Steckkontakte mit einer Platine der Kommunikations vorrichtung Verbunden ist, wobei mindestens ein austauschbares Modul (6) ein Modul zur drahtlosen Kommunikation nach dem Bluetooth-Übertragungsstandard zwischen den Geräten (2, 3, 4, 5), Sensoren und/oder Funktionseinrichtungen ist.

2. Kommunikationsvorrichtung nach Anspruch 1, **dadurch gekennzeichnet, dass** die Kommunikationsvorrichtung (1) mit einer Mehrzahl von Steckbuchsen ausgebildet ist, über die die Kommunikationsvorrichtung (1) mit den Geräten (2, 3, 4, 5), Sensoren und/oder Funktionseinrichtungen verbunden ist.

3. Kommunikationsvorrichtung nach Anspruch 1 oder 2, **dadurch gekennzeichnet, dass** mindestens ein austauschbares Modul (6) ein Modul zur drahtlosen Kommunikation nach dem GSM- und/oder GPRS-Übertragungsstandard ist.

4. Kommunikationsvorrichtung nach einem der Anspruch 1 bis 3, **gekennzeichnet durch** mindestens eine eigene Rechnereinrichtung, die ausgewählte Fahrzeugdaten empfängt und empfangene Daten verknüpft und/oder aufbereitet.

5. Kommunikationsvorrichtung nach einem der Anspruch 1 bis 4, **dadurch gekennzeichnet, dass** sie als mobile Einheit ausgebildet und an verschiedenen Stellen eines Kraftfahrzeuges, vorzugsweise in die Mittenkonsole (8) eines Kraftfahrzeuges, einbaubar ist.

## Claims

1. Communication apparatus having an interface function in a motor vehicle, for connection of two or more appliances which are located in a motor vehicle and/or outside the motor vehicle to sensors and/or functional devices which are arranged in and/or on the motor vehicle,
with the communication apparatus (1) having at least one interchangeable module (6, 10) which is connected by means of a connecting device to the communication apparatus (1), with data relating to transmission paths and protocols being stored in the interchangeable module (6) and being matched to the appliances (2, 3, 4, 5) to be connected, **characterized in that** the interchangeable module is connected via plug contacts to a board in the communication apparatus, with at least one interchangeable module (6) being a module for wire-less communication based on the Bluetooth transmission standard between the appliances (2, 3, 4, 5), sensors and/or functional devices.

2. Communication apparatus according to Claim 1, **characterized in that** the communication apparatus (1) has two or more plug sockets via which the communication apparatus (1) is connected to the appliances (2, 3, 4, 5), sensors and/or functional devices.

3. Communication apparatus according to Claim 1 or 2, **characterized in that** at least one interchangeable module (6) is a module for wire-less communication based on the GSM and/or GPRS transmission standard.

4. Communication apparatus according to one of Claims 1 to 3, **characterized by** at least one computer device of its own, which receives selected vehicle data and logically links and/or processes received data.

5. Communication apparatus according to one of Claims 1 to 4, **characterized in that** the communication apparatus is a mobile unit and can be installed at various points in a motor vehicle, preferably in the centre console (8) of a motor vehicle.

## Revendications

1. Dispositif de communication à fonction d'interfaçage dans un véhicule automobile, pour le raccordement d'une pluralité d'appareils situés dans un véhicule automobile et/ou à l'extérieur du véhicule automobile à des détecteurs et/ou des dispositifs fonctionnels disposés dans et/ou sur le véhicule automobile, le dispositif de communication (1) comportant au moins un module remplaçable (6, 10) qui est relié au dispositif de communication (1) au moyen d'un dispositif de liaison, des données concernant les parcours de transmission et les protocoles qui sont accordés aux appareils (2, 3, 4, 5) à raccorder étant conservées dans le module remplaçable (6), **caractérisé en ce que** le module remplaçable est relié par des contacts enfichables à une platine du dispositif de communication, au moins un module remplaçable (6) étant un module qui permet la communication sans fil selon la norme de transmission Bluetooth entre les appareils (2, 3, 4, 5), les détecteurs et/ou les dispositifs fonctionnels.

2. Dispositif de communication selon la revendication 1, **caractérisé en ce que** le dispositif de communication (1) est configuré avec une pluralité de douilles d'enfichage par lesquels le dispositif de communication (1) est relié aux appareils (2, 3, 4, 5), aux détecteurs et/ou aux dispositifs fonctionnels.

3. Dispositif de communication selon les revendications 1 ou 2, **caractérisé en ce qu'**au moins un module remplaçable (6) est un module de communication sans fil qui fonctionne selon la norme de transmission GSM et/ou la norme de transmission GPRS.

4. Dispositif de communication selon l'une des revendications 1 à 3, **caractérisé par** au moins un dispositif de calcul propre qui reçoit des données sélectionnées du véhicule et associe et/ou traite les données reçues.

5. Dispositif de communication selon l'une des revendications 1 à 4, **caractérisé en ce qu'**il est configuré comme unité mobile et peut être monté en différents emplacements d'un véhicule automobile, de préférence dans la console centrale (8) d'un véhicule automobile.
